# EUROPÄISCHE PATENTSCHRIFT

(11) **EP 0 337 431 B1**
(45) Veröffentlichungstag und Bekanntmachung des Hinweises auf die Patenterteilung: **23.06.1993**
(21) Anmeldenummer: 89106526.0
(22) Anmeldetag: 12.04.1989
(51) Int. Cl.: C08F 285/00, C08F 255/10

(54) **Stabilisierte Styrolcopolymere enthaltend Elastomerteilchen**
Stabilized styrene copolymer comprising elastomer particles
Copolymères de styrène stabilisé contenant des particules d'élastomère

(30) Priorität: 15.04.1988 CH 1402/88
(43) Veröffentlichungstag der Anmeldung: 18.10.1989
(73) Patentinhaber: CIBA-GEIGY AG, 4002 Basel (CH)
(72) Erfinder: Mülhaupt, Rolf, Dr., CH-1723 Marly (CH); Gilg, Bernard, Dr., F-68300 St. Louis-La-Chaussée (FR); Rytz, Gerhard, Dr., CH-3150 Schwarzenburg (CH); Slongo, Mario, Dr., CH-1712 Tafers (CH)
(74) Vertreter: Zumstein, Fritz, Dr.

(56) Entgegenhaltungen:
- EP-A- 0 101 411
- EP-A- 0 285 293
- US-A- 4 487 887
- US-A- 4 487 900

## Beschreibung

Die Erfindung betrifft gegen Lichtschädigung stabilisierte Copolymere von Styrol oder α-Methylstyrol und mindestens einem Comonomer, die vernetzte Elastomerteilchen enthalten.

Styrolcopolymere, welche Elastomerteilchen enthalten, sind bekannt als thermoplastische Kunststoffe mit hoher Schlagzähigkeit. Vorzugsweise handelt es sich dabei um Pfropfcopolymere. Diese bestehen aus einer thermoplastischen Styrolcopolymer-Matrix, welche als disperse Phase vernetzte Elastomerteilchen enthält, wobei das auf die Elastomerteilchen aufgepfropfte Copolymere als Phasenvermittler wirkt. Hergestellt werden diese Styrolcopolymeren, indem man leicht vernetzte Elastomerteilchen einer Pfropfpolymerisation mit Styrol und einem oder mehreren Comonomeren unterwirft. Die leicht vernetzten Elastomerteilchen können durch Phaseninversion in Masse oder durch Emulsionspolymerisation hergestellt werden. Als Elastomer eignen sich z.B. Polybutadien, Butadien/Acrylnitril- oder Butadien/Styrol-Copolymere, Ethylen/Propylen/Dien-Terpolymere oder Acrylat-Elastomere, wie z.B. Polybutylacrylat und dessen Copolymere.

Pfropfcopolymere von Styrol/Acrylnitril auf Polybutadien bezeichnet man als ABS-Polymere, Pfropfcopolymere von Styrol/Methylmethacrylat auf Polybutadien als MBS-Polymere. Ausser diesen beiden wichtigsten Typen sind noch andere Styrolcopolymere mit Elastomerphasen bekannt geworden sowie deren Polymermischungen (Blends) mit Styrol-Copolymeren oder anderen Thermoplasten. Siehe dazu Encyclopedia Polymer Sci. Engng., J. Wiley 1985, Vol. 1, Seite 388-426; Ullmanns Encyclop. d. techn. Chemie, Verlag Chemie 1980, Band 19, Seite 277-295.

Kunststoffe vom ABS- oder MBS-Typ sind technische Thermoplaste, die in grossem Umfang z.B. bei der Herstellung von Haushalts-, Elektro- oder Sportgeräten sowie von Automobilteilen verwendet werden. Für eine Verwendung im Aussensektor müssen diese Polymeren gegen Licht und Sauerstoff stabilisiert werden. Es ist bekannt, dass Elastomer-Styrol-Pfropfcopolymere rasch altern und dadurch verspröden. Beispielsweise wurde beim Bestrahlen von ABS-Polymeren mit UV-Licht ein Verschwinden der Doppelbindungen in der Polybutadien-Phase gleichzeitig mit einer Versprödung des Polymeren festgestellt, was schliesslich zum Verlust der Schlagzähigkeit führt (G. Scott, M. Tahan, Eur. Polym. J. 13 (1977), 982).

Zur Stabilisierung setzt man diesen Polymeren Antioxidantien und Lichtschutzmittel zu. Als Lichtschutzmittel werden heute vor allem sterisch gehinderte Amine verwendet, insbesondere in Kombination mit UV-Absorbern. Solche Kombinationen werden z.B. in der DE-A-2 417 535 für alle Arten von Styrol-Copolymerisaten empfohlen. Hierbei handelt es sich um eine Stabilisierung durch Zusatz von Lichtschutzmitteln (physikalische Mischung).

In der EP-A-496 wurden auch bereits Copolymerisate von ungesättigten Derivaten von sterisch gehinderten Aminen mit anderen Monomeren beschrieben. Diese Copolymeren haben einen hohen Gehalt an sterisch gehinderten Aminen und können als polymere Lichtschutzmittel verwendet werden.

Im US-A-4 743 657 wird die Herstellung polymerer Stabilisatoren durch Pfropfung ungesättigter Stabilisatoren an Polymere, zum Beispiel an Polypropylen, beschrieben.

Auf der Suche nach einem verbesserten Lichtschutz von Elastomer-Styrol-Pfropfcopolymerisaten wurde versucht, ungesättigte Derivate von sterisch gehinderten Aminen durch Copolymerisation zu inkorporieren. Dabei zeigte sich überraschend, dass der Einbau in die Elastomerphase solcher Pfropfcopolymerisate eine besonders hohe Wirksamkeit erbringt.

Gegenstand der Erfindung sind daher gegen Lichtschädigung stabilisierte Copolymere aus Styrol oder α-Methylstyrol und mindestens einem Comonomer, enthaltend vernetzte Elastomerteilchen, welche durch Copolymerisation mit einem ungesättigten Derivat eines sterisch gehinderten Amins modifiziert sind.

Hierbei handelt es sich vorzugsweise um Pfropfcopolymere von Styrol oder α-Methylstyrol und mindestens einem Comonomeren auf dem modifizierten vernetzten Elastomer.

Das Comonomer kann eine beliebige polymerisierbare ungesättigte Verbindung sein, beispielsweise ein Acrylsäure-, Methacrylsäure- oder Maleinsäurederivat oder ein Styrolderivat. Bevorzugt ist das Comonomere Acrylnitril oder Methylmethacrylat. Es können auch zwei Comonomere verwendet werden, z.B. Gemische von Acrylnitril und Methylmethacrylat oder Gemische von Acrylnitril oder Methylmethacrylat mit kleinen Mengen an Vinylacetat, Butylacrylat oder Maleinsäureestern.

Bevorzugt handelt es sich bei den Copolymeren um solche aus Styrol und Acrylnitril oder Styrol und Methylmethacrylat.

Das Elastomer kann ein beliebiges für Pfropfcopolymerisationen geeignetes Elastomer sein. Beispiele hierfür sind Polybutadien, Butadien-Acrylnitril-Copolymere, Butadien-Styrol-Copolymere, Ethylen-Propylen-Dien-Terpolymere oder Polybutylacrylat und dessen Copolymere. Bevorzugt ist das Elastomer Polybutadien. Die Herstellung dieser Elastomerteilchen geschieht nach bekannten Verfahren, wie durch Massepolymerisation oder Suspensionspolymerisation, insbesondere aber durch Emulsionspolymerisation. Die Elastomerteilchen sind schwach vernetzt und haben im allgemeinen einen durchschnittlichen Durchmesser von 0,1 bis 50 µm, vorzugsweise 0,5 bis 20 µm.

Die Modifikation des Elastomeren mit dem sterisch gehinderten Amin erfolgt durch Copolymerisation. Die Copolymerisation kann bei der Herstellung des Elastomeren geschehen oder als Pfropfcopolymerisation auf das vernetzte Elastomer. Die Pfropfung mit dem sterisch gehinderten Amin kann gleichzeitig mit der Pfropfung mit dem Styrol/Comonomer-Gemisch erfolgen. Vorzugsweise verfährt man in zwei Schritten, indem man zuerst das ungesättigte Derivat des sterisch gehinderten Amins aufpfropft und anschliessend das Styrol/Comonomer-Gemisch. Die Pfropfpolymerisation erfolgt vorzugsweise in Emulsion.

Als ungesättigtes Derivat eines sterisch gehinderten Amins wird vorzugsweise ein copolymerisierbares ungesättigtes Derivat des 2,2,6,6-Tetramethylpiperidins verwendet. Hierbei kann sich die ungesättigte Gruppe in einem Substituenten in 4-Stellung oder/und 1-Stellung des Piperidinringes befinden. Beispiele für ungesättigte Gruppen sind vor allem Acrylolyl- und Methacryloylgruppen, ferner Maleinsäuregruppen, Vinylether- und Allylethergruppen, Allylaminogruppen oder Crotonylgruppen.

Bevorzugt verwendet man zur Copolymerisation mit dem Elastomer eine Verbindung der Formel I, 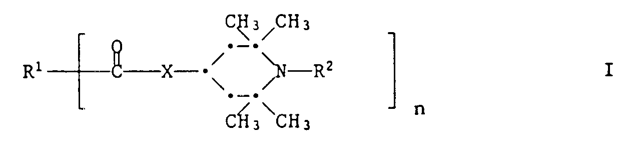
worin n 1 oder 2 ist und X -O- oder -N(R³)- bedeutet,
- R¹: bei n=1 C₁-C₁₈-Alkyl, C₂-C₅-Alkenyl, C₅-C₈-Cycloalkyl, C₇-C₉-Phenylalkyl, Phenyl, durch Halogen, C₁-C₄-Alkyl oder C₁-C₄-Alkoxy substituiertes Phenyl oder eine Gruppe R⁴ OOC-CH=CH-bedeutet, und bei n=2 C₂-C₁₀-Alkylen, Vinylen, C₆-C₁₂-Arylen oder Cyclohexylen bedeutet,
- R²: Wasserstoff, C₁-C₁₂-Alkyl, C₃-C₅-Alkenyl, C₇-C₉-Phenylalkyl, C₂-C₁₀-Alkanoyl, C₃-C₆-Alkenoyl oder eine Gruppe der Formel III 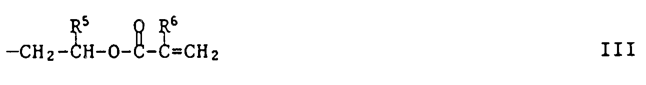 bedeutet,
- R³: Wasserstoff, C₁-C₁₂-Alkyl oder C₅-C₈-Cycloalkyl bedeutet,
- R⁴: Wasserstoff oder C₁-C₁₂-Alkyl bedeutet,
- R⁵: Wasserstoff, CH₃ oder CN bedeutet und
- R⁶: Wasserstoff, C₁-C₁₂-Alkyl oder Phenyl bedeutet,
wobei mindestens einer der Substituenten R¹ und R² eine ethylenische Doppelbindung enthält.

Bevorzugt verwendet man auch die Verbindungen der Formel II, 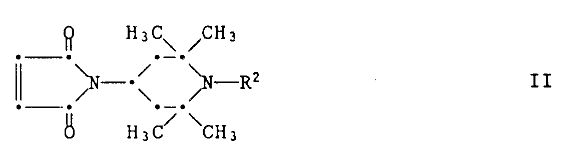
worin R² Wasserstoff, C₁-C₁₂-Alkyl, C₃-C₅-Alkenyl, C₇-C₉-Phenylalkyl oder C₂-C₁₀-Alkanoyl bedeutet.

Unter den Verbindungen der Formel I sind bevorzugt
a) diejenigen, worin n 1 ist, X -O- ist, R¹ C₂-C₅-Alkenyl ist und R² Wasserstoff, C₁-C₄-Alkyl, Allyl, Benzyl oder Acetyl bedeutet,
b) diejenigen, worin n 1 oder 2 ist, X -O- ist, R¹ bei n=1 C₁-C₁₈-Alkyl, Cyclohexyl oder Phenyl und bei n=2 C₂-C₈-Alkylen bedeutet und R² C₃-C₆-Alkenoyl bedeutet,
c) diejenigen, worin n 1 ist, X -O- ist, R¹ C₂-C₅-Alkenyl ist und R² eine Gruppe der Formel III ist, worin R⁵ und R⁶ Wasserstoff oder CH₃ bedeuten.

In diesen Formeln können R¹, R², R³, R⁴ und R⁶ als Alkyl unverzweigt oder verzweigt sein. Beispiele hierfür sind Methyl, Ethyl, n-Propyl, iso-Propyl, n-Butyl, sec.Butyl, tert.Butyl, iso-Pentyl, n-Hexyl, n-Octyl, 2-Ethylhexyl, n-Decyl, iso-Undecyl oder n-Dodecyl. R¹ als Alkyl kann beispielsweise auch Tetradecyl, Hexadecyl oder Octadecyl sein.

R¹ als C₂-C₅-Alkenyl kann z.B. Vinyl, Propenyl, iso-Propenyl, Butenyl oder Pentenyl sein, insbesondere Vinyl und 2-Propenyl (iso-Propenyl). R² als C₃-C₅-Alkenyl ist vorzugsweise Allyl.

R¹ und R³ als C₅-C₈-Cycloalkyl können z.B. Cyclopentyl, Cyclohexyl oder Cyclooctyl sein, insbesondere aber Cyclohexyl.

R¹ und R² als C₇-C₉-Phenylalkyl können z.B. Benzyl, Phenylethyl oder Phenylpropyl sein, insbesondere aber Benzyl.

R² als C₂-C₁₀-Alkanoyl kann z.B. Acetyl, Propionyl, Butyroyl, iso-Butyroyl, n-Pentanoyl, tert.Pentanoyl, Hexanoyl, Octanoyl oder iso-Decanoyl sein, insbesondere aber Acetyl. R² als C₃-C₆-Alkenoyl ist insbesondere Acryloyl oder Methacryloyl.

R¹ als C₂-C₁₀-Alkylen kann z.B. Di-, Tri-, Tetra-, Hexa-, Octa-, Decamethylen, 2,2-Dimethyltrimethylen oder 1,3,3-Trimethyltetramethylen sein.

R¹ als C₆-C₁₂-Arylen kann z.B. Phenylen, Naphthylen oder Diphenylen sein, insbesondere Phenylen.

Alle Verbindungen der Formeln I und II enthalten mindestens eine ethylenische Doppelbindung, auf Grund derer die Verbindung zur Copolymerisation befähigt ist. Die Verbindungen können aber auch zwei Doppelbindungen enthalten. Solche Verbindungen werden bevorzugt während der Herstellung des Elastomeren copolymerisiert.

Beispiele für Verbindungen der Formel I sind:
1,2,2,6,6-Pentamethyl-4-piperidinyl-acrylat, -methacrylat oder -crotonat,
2,2,6,6-Tetramethyl-4-piperidinyl-acrylat, -methacrylat oder -crotonat,
1-Allyl-2,2,6,6-tetramethyl-4-piperidinyl-acrylat, -methacrylat oder -crotonat,
1-Benzyl-2,2,6,6-tetramethyl-4-piperidinyl-acrylat, -methacrylat oder -crotonat,
N-(2,2,6,6-Tetramethyl-4-piperidinyl)-acrylamid,
N-Methyl-N-(1,2,2,6,6-pentamethyl-4-piperidinyl)-methacrylamid,
N-Butyl-N-(1,2,2,6,6-pentamethyl-4-piperidinyl)-acrylamid,
Monoethyl-mono(1,2,2,6,6-pentamethyl-4-piperidinyl)-maleinat,
Di(2,2,6,6-tetramethyl-4-piperidinyl)-fumarat,
Monohexylmaleinat-N-(2,2,6,6-tetramethyl-4-piperidinyl)-N-butylamid,
N,N'-Di(1,2,2,6,6-pentamethyl-4-piperidinyl)-N,N'-dibutyl-maleindiamid,
1-Acryloyl-2,2,6,6-tetramethyl-4-acetoxypiperidin,
1-Methacryloyl-2,2,6,6-tetramethyl-4-butyroyloxypiperidin,
1-Crotonyl-2,2,6,6-tetramethyl-4-benzoyloxypiperidin,
1-Acryloyl-2,2,6,6-tetramethyl-4-acryloyloxypiperidin,
1-Methacryloyl-2,2,6,6-tetramethyl-4-methacryloyloxypiperidin,
1-Acryloyl-2,2,6,6-tetramethyl-4-(4-chlorbenzoyloxy)-piperidin,
Di(1-acryloyl-2,2,6,6-tetramethyl-4-piperidinyl)-sebacat,
Di(1-methacryloyl-2,2,6,6-tetramethyl-4-piperidinyl)-adipat,
Di(1-acryloyl-2,2,6,6-tetramethyl-4-piperidinyl)-succinat,
Di(1-crotonyl-2,2,6,6-tetramethyl-4-piperidinyl)-phthalat,
N-(1-Acryloyl-2,2,6,6-tetramethyl-4-piperidinyl)-acetamid,
N-(1-Acryloyl-2,2,6,6-tetramethyl-4-piperidinyl)-N-butyl-benzamid,
N,N'-Di(1-methacryloyl-2,2,6,6-tetramethyl-4-piperidinyl)-N,N'-dicyclohexyl-isophthalamid,
1-(2-Acryloyloxyethyl)-4-acryloyloxy-2,2,6,6-tetramethylpiperidin,
1-(2-Methacryloyloxyethyl)-4-methacryloyloxy-2,2,6,6-tetramethylpiperidin,
1-(2-Acryloyloxypropyl)-4-acryloyloxy-2,2,6,6-tetramethylpiperidin.

Beispiele für Verbindungen der Formel II sind:
N-(2,2,6,6-Tetramethyl-4-piperidinyl)-maleinimid,
N-(1,2,2,6,6-Pentamethyl-4-piperidinyl)-maleinimid,
N-(1-Benzyl-2,2,6,6-tetramethyl-4-piperidinyl)-maleinimid,
N-(1-Acetyl-2,2,6,6-tetramethyl-4-piperidinyl)-maleinimid.

Die erfindungsgemäss verwendbaren ungesättigten Derivate von sterisch gehinderten Aminen sind jedoch keineswegs auf Verbindungen der Formel I und II beschränkt. Im Prinzip lässt sich jedes ungesättigte Derivat eines sterisch gehinderten Amins verwenden, soweit es zur Copolymerisation mit der Elastomer-Komponente befähigt ist.

Das ungesättigte sterisch gehinderte Amin kann allein oder zusammen mit anderen ungesättigten Verbindungen copolymerisiert werden. Beispiele für solche Comonomere sind Alkylacrylate, Alkylmethacrylate, Acryl- und Methacrylamide, Acrylnitril oder Methacrylnitril.

Das Gemisch von Styrol oder α-Methylstyrol und dem Comonomer kann gemeinsam mit dem ungesättigten Derivat eines sterisch gehinderten Amins auf die Elastomerteilchen aufgepfropft werden. Vorzugsweise führt man die Pfropfcopolymerisation in zwei Schritten durch. Im ersten Schritt pfropft man das ungesättigte sterisch gehinderte Amin allein oder zusammen mit anderen ungesättigten Verbindungen auf das Elastomere auf. In einem zweiten Schritt wird darauf das Gemisch von Styrol oder α-Methylstyrol und dem Comonomer aufgepfropft.

Alternativ können die mit dem ungesättigten sterisch gehinderten Amin gepfropften Elastomerteilchen in einem zweiten Schritt mit einem separat hergestellten Styrol- bzw. α-Methylstyrol-Copolymer vermischt werden. Bevorzugt wird jedoch die Styrolphase auf das modifizierte Elastomer aufgepfropft.

Die Copolymerisation bzw. Pfropfcopolymerisation geschieht nach den hierfür üblichen Verfahren. Vorzugsweise führt man sie in Emulsion durch. Als Emulgator verwendet man vorzugsweise anionische Tenside, beispielsweise Alkalisulfonate oder Alkaliresinate. Die Teilchengrösse des Polymerisats kann durch die Menge und die Dosierung des Tensids kontrolliert werden. Als Polymerisationsinitiatoren für die Herstellung der Elastomerphase verwendet man vorzugsweise wasserlösliche Radikalinitiatoren, wie z.B. Kaliumpersulfat. Zur Polymerisation der Styrolphase verwendet man vorzugsweise Redox-Initiatoren, wie z.B. das System Eisen(II)salz / organisches Peroxid. Beide Stufen der Polymerisation werden vorzugsweise unterhalb 100°C durchgeführt, insbesondere bei 40-70°C. Die Isolierung des Copolymerisates kann z.B. durch Koagulation oder durch Sprühtrocknung geschehen. Eine Koagulation der Emulsion kann erreicht werden durch Zusatz von wasserlöslichen Salzen, durch Erhöhung der Temperatur, durch Erniedrigung des pH-Wertes oder durch Ausfrieren.

Nach diesem Verfahren ist es möglich, Copolymere mit sehr geringem oder sehr hohem Gehalt an sterisch gehindertem Amin herzustellen. Da das Amin an das Elastomer chemisch gebunden ist, kann es nicht durch Migration oder Elution verlorengehen. Bevorzugt sind Copolymere, die 0,1 bis 20 Gew.-%, vorzugsweise 0,1 bis 10 Gew.-% sterisch gehindertes Amin enthalten.

Den so stabilisierten Copolymeren können noch andere, bekannte Stabilisatoren zugesetzt werden. Beispiele hierfür sind die folgenden Klassen von Stabilisatoren:
1. Antioxidantien
1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol.
1.3. Hydroxylierte Triodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
1.4. Alkyliden-Bisphenole, z.B. 2,2′-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenyzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methyl-benzyl)-6-tert.butyl-4-methyl-phenyl]-terephthalat.
1.5. Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-iso-octylester, Bis-(4-tert.butyl-3-hydroxy-2,6-dimethylbenzyl)dithiolterephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)carbaminsäureoctylester.
1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.
1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.
2. UV-Absorber und Lichtschutzmittel
2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxyzimtsäure-methylester, N-(β-Carbomethoxy-β-cyanovinyl)-2-methyl-indolin.
2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
2.6. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyloxanilid, 2-Ethoxy-2'-ethyl-oxanilid, N,N'-Bis-(3-dimethylaminopropyl)oxalimid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.
2.7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis(3,5-di-tert.butyl-4-hydroxyphenylpropionyl)-hydrazin, 3-Salicyloylamino-1,2,4-triazol, Bis-(benzyliden)-oxalsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrittetrakis-(β-dodecylmercapto)-propionat.

Von besonderer Bedeutung ist die Mitverwendung von UV-Absorbern, von phenolischen Antioxidantien und von Phosphiten bzw. Phosphoniten.

Weiterhin können sonstige in der Kunststoff-Technologie übliche Hilfsmittel zugesetzt werden, wie z.B. Pigmente, Füllstoffe, Verstärkungsmittel, Gleitmittel, Flammschutzmittel, Antistatica oder Treibmittel.

Die folgenden Beispiele beschreiben die Erfindung näher ohne sie auf die Beispiele beschränken zu wollen. Darin bedeuten Teile Gewichtsteile und % Gewichts-%, soweit nicht anders vermerkt.

### Beispiel 1:

In ein 4 l-Rührgefäss werden unter Stickstoff 260 g eines Polybutadienlatex mit 59 % Feststoffgehalt (Baygal® 2004 D) mit 800 ml Wasser verdünnt. Zur Bereitung des Initiators 1 löst man unter Stickstoff 500 mg FeSO₄·7H₂O in 50 ml Wasser und gibt 5,9 ml dieser Lösung zu 17,9 ml einer 10 %igen Na₄P₂O₇-Lösung. Nach 15 Minuten Rühren verdünnt man mit 17 ml Wasser und gibt diese Lösung zum gerührten Latex zu. Unmittelbar darauf gibt man 10 g einer Mischung von 1,2,2,6,6-Pentamethyl-4-acryloyloxypiperidin (PMAP), 0,3 g Cumolhydroperoxid und 0,2 g tert. Dodecylmercaptan zu. Man erwärmt auf 50°C und rührt 3 Stunden bei dieser Temperatur mit einer Rührgeschwindigkeit von ca. 50 Umdrehungen/Minute. Dann gibt man eine wässrige Emulgatorlösung zu, die bereitet wird aus 20 ml einer 10 %igen Lösung von Kaliumrosinat (Dresinate® 731, Hercules Inc.), 2 ml 10 %ige NaOH-Lösung, 5 ml einer 10 %igen Glucose-Lösung und 1,2 ml einer 10 %igen Lösung von Natrium-alkylnaphthalinsulfonat (Tamol® NN). Dann bereitet man den Initiator 2, indem man unter Stickstoff 500 mg FeSO₄·7H₂O in 50 ml Wasser löst, 12 ml dieser Lösung zu 36 ml einer 10%igen Na₄P₂O₇-Lösung gibt, nach 15 Minuten Rühren mit 70 ml Wasser verdünnt und diese so erhaltene Lösung zum Latex zugibt. Anschliessend werden 300 g Styrol, 150 g Acrylnitril, 3 g Cumolperoxid und 3 g tert. Dodecylmercaptan zugegeben und 5 Stunden bei 50°C mit einer Rührgeschwindigkeit von ca. 50 Umdrehungen/Minute gerührt. Alle diese Operationen werden unter Ausschluss von Sauerstoff ausgeführt.

Zur Aufarbeitung setzt man 10 ml einer 20%igen wässrigen Emulsion eines phenolischen Antioxidans (Irganox® 1076, Ciba-Geigy) zu, entfernt Restmonomere durch Durchleiten eines Stickstoffstromes, filtriert den Latex über Glaswolle ab und koaguliert die Emulsion durch Zusatz von 100 ml eines Fällungsmittels bestehend aus einer Lösung von 200 g MgSO₄·7H₂O und 100 g Essigsäure in 1800 ml Wasser. Um die Koagulation zu vervollständigen wird 1 Stunde bei 95°C mit einer Rührgeschwindigkeit von 500 Umdrehungen/Minute gerührt. Das ausgefällte Polymer-Granulat wird heiss abfiltriert, mit 10 l Wasser gewaschen und im Vakuum bei 60°C bis zur Gewichtskonstanz getrocknet. Man erhält 420 g eines weissen körnigen Pulvers.

In analoger Weise werden ABS-Polymere mit verschiedenen Zusatzmengen an PMAP hergestellt, wobei das Verhältnis der Initiatorkomponente 1 zu dem im PMAP enthaltenen Cumolperoxid/Dodecylmercaptan konstant gehalten wird.

Die erhaltenen Polymeren werden auf einem 2-Walzenstuhl 5 Minuten bei 180°C mit 1 % Magnesiumstearat, 1 % eines Gleitmittels (Irgawax® 280) und 0,2 % eines phenolischen Antioxidans (Irganox® 1076) vermischt. Die erhaltenen Mischungen werden in einer Heizpresse bei 180°C zu 2 mm starken Platten verpresst. Aus den Platten werden Prüfkörper von 10 x 20 x 2 mm ausgeschnitten. Diese Plättchen werden in einem Xenotest 450 mit UV-Licht belichtet. In regelmässigen Abständen werden Proben entnommen und deren Schlagbiegefestigkeit gemäss Methode ASTM D 4508-85 gemessen. Dabei erfolgt der Pendelschlag auf die belichtete Seite der Probe. In der folgenden Tabelle ist die für den Bruch der Probe erforderliche Energie angegeben. Je höher dieser Wert ist, desto höher ist die Schlagbiegefestigkeit der Probe. Bei ungeschädigten Proben erfolgt kein Bruch.

**Tabelle 1**

| Gehalt an PMAP | Schlagbiegefestigkeit in kJ/m² | | | |
|---|---|---|---|---|
| | nach 48 | 96 | 172 | 250 h Xenotest |
| 0 % | 23 | 20 | 17 | 17 |
| 1,6 % | K.B. | K.B. | 18 | 17 |
| 4,0 % | K.B. | K.B. | K.B. | 17 |
| 7,6 % | K.B. | K.B. | K.B. | K.B. |
| K.B. = Kein Bruch PMAP = 1,2,2,6,6-Pentamethyl-4-acryloyloxypiperidin | | | | |

### Beispiel 2:

Es wird wie in Beispiel 1 gearbeitet, jedoch wird gleichzeitig mit dem PMAP ein Alkylacrylat als Comonomer zugegeben.

| | Stabilisator | Comonomer |
|---|---|---|
| 2a) | 10 g PMAP = 1,5% | 40 g Butylacrylat = 6 % |
| 2b) | 20 g PMAP = 3 % | 30 g Butylacrylat = 4,5 % |
| 2c) | 20 g PMAP = 2,9 % | 60 g Butylacrylat = 8,7 % |
| 2d) | 10 g PMAP = 1,5 % | 40 g Dodecylacrylat = 6 % |

Von den erhaltenen ABS-Polymeren werden wie in Beispiel 1 beschrieben Prüfplättchen von 10 x 20 x 2 mm hergestellt, im Xenotest 450 belichtet und die Schlagbiegefestigkeit gemessen. Die Ergebnisse sind in Tabelle 2 aufgeführt.

**Tabelle 2**

| Polymer | Gehalt an PMAP | Schlagbiegefestigkeit in kJ/m² | | | |
|---|---|---|---|---|---|
| | | nach 48 | 96 | 172 | 250 h Xenotest |
| 2a | 1,5 % | K.B. | K.B. | K.B. | K.B. |
| 2b | 3 % | K.B. | K.B. | K.B. | K.B. |
| 2c | 2,9 % | K.B. | K.B. | K.B. | K.B. |
| 2d | 1,5 % | K.B. | K.B. | K.B. | K.B. |
| K.B. = Kein Bruch | | | | | |

### Beispiel 3:

Es wird wie in Beispiel 1 gearbeitet, jedoch werden statt PMAP die folgenden Piperidinverbindungen auf das Polybutadien aufgepfropft:
3a 1,2,2,6,6-Pentamethyl-4-methacryloyloxypiperidin
3b 1,2,2,6,6-Pentamethyl-4-(N-butyl)-acrylamidopiperidin
3c 1-Acetyl-2,2,6,6-tetramethyl-4-acryloyloxypiperidin
Die Menge an Piperidinverbindung entspricht 4,5 %, bezogen auf das ABS-Polymere.

Von den erhaltenen ABS-Polymeren wird wie in Beispiel 1 beschrieben die Schlagbiegefestigkeit gemessen.

**Tabelle 3**

| Polymer | Schlagbiegefestigkeit in kJ/m² | | | |
|---|---|---|---|---|
| | nach 48 | 96 | 172 | 250 h Xenotest |
| 3a | K.B. | K.B. | K.B. | K.B. |
| 3b | K.B. | K.B. | K.B. | 19 |
| 3c | K.B. | K.B. | 19 | 15 |

### Beispiel 4:

In einen 1 l Rührautoklaven gibt man unter Stickstoff 150 g deionisiertes Wasser, 10 g 10 % wässrige Kaliumrosinatlösung, 0,1 g Kaliumhydroxid, 0,3 g Kaliumpersulfat, 0,2 g tert.Dodecylmercaptan, 2 g 1,2,2,6,6-Pentamethyl-4-acryloyloxypiperidin und 100 g Butadien. Bei 55-65°C und einer Rührgeschwindigkeit von 50 Umdrehungen/Minute polymerisiert man bis 30-40 % Umsatz erreicht sind und gibt dann unter Stickstoff 30 g deionisiertes Wasser, 10 g 10 % wässriges Kaliumrosinat und 2 g 1,2,2,6,6-Pentamethyl-4-acryloyloxypiperidin zu und polymerisiert 3 Tage bei 55°C. Dann wird das nicht polymerisierte Butadien durch Durchleiten eines Stickstoffstromes entfernt und der so erhaltene Polybutadienlatex mit 380 ml deionisiertem Wasser, 6 ml 10 % wässrigem Kaliumrosinat, 6 ml 10 % wässriger Benzolsulfonsäure, 15 ml 10 % wässriger Glucose, 6 ml 10 % wässrigem Natriumhydroxid versetzt. Zur Bereitung des Initiators 2 löst man unter Stickstoff 500 mg FeSO₄·7 H₂O in 50 ml Wasser und gibt 5,9 ml dieser Lösung zu 17,9 ml einer 10 %igen wässrigen Na₄P₂O₇-Lösung. Nach 15 Minuten Rühren verdünnt man mit 17 ml Wasser und gibt diese Lösung zum Polybutadienlatex. Unmittelbar darauf wird eine Mischung aus 150 g Styrol, 75 mg Acrylnitril, 1,5 g Cumolhydroperoxid, 1.5 g tert.Dodecylmercaptan zugesetzt und 6 Stunden bei 70 Umdrehungen/Minute Rührgeschwindigkeit und 50°C polymerisiert. Zur Aufarbeitung verfährt man wie in Beispiel 1 beschrieben. Man erhält 275 g eines weissen Pulvers.

## Patentansprüche (Patentansprüche für folgende(n) Vertragsstaat(en): BE, DE, FR, GB, IT, NL)

1. Gegen Lichtschädigung stabilisiertes Copolymer aus Styrol oder α-Methylstyrol und mindestens einem Comonomer, wobei das Copolymer vernetzte Elastomerteilchen enthält, welche durch Copolymerisation mit einem ungesättigten Derivat eines sterisch gehinderten Amins modifiziert sind.

2. Copolymer gemäss Anspruch 1, welches ein Pfropfcopolymer von Styrol oder α-Methylstyrol und mindestens einem Comonomer auf dem modifizierten vernetzten Elastomer ist.

3. Copolymer gemäss Anspruch 1, worin das Comonomer Acrylnitril ist.

4. Copolymer gemäss Anspruch 1, worin das Comonomer Methylmethacrylat ist.

5. Copolymer gemäss Anspruch 1, dadurch gekennzeichnet, dass die Elastomerteilchen aus einem Pfropfcopolymerisat eines ungesättigten Derivates eines sterisch gehinderten Amins auf einem vernetzten Elastomeren bestehen.

6. Copolymer gemäss Anspruch 1, dadurch gekennzeichnet, dass das Elastomer Polybutadien ist.

7. Copolymer gemäss Anspruch 1, dadurch gekennzeichnet, dass das sterisch gehinderte Amin ein copolymerisierbares ungesättigtes Derivat des 2,2,6,6-Tetramethylpiperidins ist.

8. Copolymer gemäss Anspruch 7, worin das ungesättigte Derivat des Tetramethylpiperidins eine Verbindung der Formel I ist, 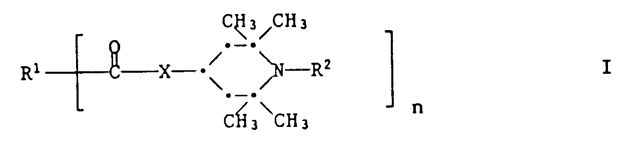 worin n 1 oder 2 ist und X -O- oder -N(R³)- bedeutet,
R¹ bei n=1 C₁-C₁₈-Alkyl, C₂-C₅-Alkenyl, C₅-C₈-Cycloalkyl, C₇-C₉-Phenylalkyl, Phenyl, durch Halogen, C₁-C₄-Alkyl oder C₁-C₄-Alkoxy substituiertes Phenyl oder eine Gruppe R⁴ OOC-CH=CH-bedeutet, und bei n=2 C₂-C₁₀-Alkylen, Vinylen, C₆-C₁₂-Arylen oder Cyclohexylen bedeutet,
R² Wasserstoff, C₁-C₁₂-Alkyl, C₃-C₅-Alkenyl, C₇-C₉-Phenylalkyl, C₂-C₁₀-Alkanoyl, C₃-C₆-Alkenoyl oder eine Gruppe der Formel III 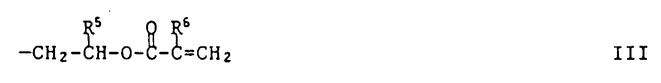 bedeutet,
R³ Wasserstoff, C₁-C₁₂-Alkyl oder C₅-C₈-Cycloalkyl bedeutet,
R⁴ Wasserstoff oder C₁-C₁₂-Alkyl bedeutet,
R⁵ Wasserstoff, CH₃ oder CN bedeutet und
R⁶ Wasserstoff, C₁-C₁₂-Alkyl oder Phenyl bedeutet,
wobei mindestens einer der Substituenten R¹ und R² eine ethylenische Doppelbinding enthält.

9. Copolymer gemäss Anspruch 7, worin das ungesättigte Tetramethylpiperidinderivat eine Verbindung der Formel II ist, 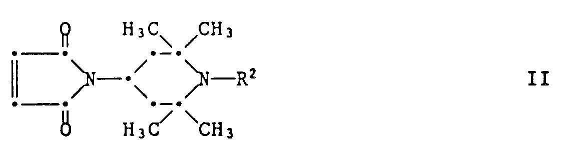 worin R² Wasserstoff, C₁-C₁₂-Alkyl, C₃-C₅-Alkenyl, C₇-C₉-Phenylalkyl oder C₂-C₁₀-Alkanoyl bedeutet.

10. Copolymer gemäss Anspruch 7, worin das ungesättigte Tetramethylpiperidinderivat eine Verbindung der Formel I ist, worin n 1 ist, X -O-ist, R¹ C₂-C₅-Alkenyl ist und R² Wasserstoff, C₁-C₄-Alkyl, Allyl, Benzyl oder Acetyl bedeutet.

11. Copolymer gemäss Anspruch 7, worin das ungesättigte Tetramethylpiperidinderivat eine Verbindung der Formel I ist, worin n 1 oder 2 ist, X -O- ist, R¹ n=1 C₁-C₁₈-Alkyl, Cyclohexyl oder Phenyl und bei n=2 C₂-C₈-Alkylen bedeutet und R² C₃-C₆-Alkenoyl bedeutet.

12. Copolymer gemäss Anspruch 7, worin das ungesättigte Tetramethylpiperidinderivat eine Verbindung der Formel I ist, worin n 1 ist, X -O- ist, R¹ C₂-C₅-Alkenyl ist und R² eine Gruppe der Formel III ist, worin R⁵ und R⁶ Wasserstoff oder CH₃ bedeuten.

13. Copolymer gemäss Anspruch 8, worin das ungesättigte Tetramethylpiperidinderivat 1,2,2,6,6-Pentamethyl-4-acryloyloxypiperidin ist.

14. Copolymer gemäss Anspruch 1, enthaltend 0,1 bis 10 Gew.-% eines sterisch gehinderten Amins in copolymer-gebundener Form.

15. Verfahren zur Herstellung eines gegen Lichtschädigung stabilisierten Styrol- oder α-Methylstyrol-Copolymeren durch Aufpfropfen eines Gemisches von Styrol oder α-Methylstyrol und mindestens eines Comonomers auf ein vernetztes Copolymer eines Elastomeren mit einem ungesättigten Derivat eines sterisch gehinderten Amins.

16. Verfahren gemäss Anspruch 15, wonach in einem ersten Schritt das ungesättigte Derivat eines sterisch gehinderten Amins auf das Elastomere aufgepfropft wird und in einem zweiten Schritt ein Gemisch von Styrol oder α-Methylstyrol und mindestens einem Comonomer aufgepfropft wird.

17. Verfahren gemäss Anspruch 16, wonach beide Verfahrensschritte in Emulsion durchgeführt werden.

18. Verfahren gemäss Anspruch 16, wonach im ersten Schritt ein Gemisch eines ungesättigten Derivates eines sterisch gehinderten Amins und eines Alkylacrylates auf das Elastomer aufgepfropft wird.

19. Verfahren gemäss Anspruch 16, wonach im zweiten Schritt ein Gemisch aus Styrol und Acrylnitril oder Methylmethacrylat aufgepfropft wird.

20. Verfahren gemäss Anspruch 15, bei dem als Elastomer Polybutadien verwendet wird.

## Patentansprüche (Patentansprüche für folgende(n) Vertragsstaat(en): ES)

1. Verfahren zur Herstellung eines gegen Lichtschädigung stabilisierten Styrol- oder α-Methylstyrol-Copolymeren durch Aufpfropfen eines Gemisches von Styrol oder α-Methylstyrol und mindestens eines Comonomers auf ein vernetztes Copolymer eines Elastomeren mit einem ungesättigten Derivat eines sterisch gehinderten Amins.

2. Verfahren gemäss Anspruch 1, wonach in einem ersten Schritt das ungesättigte Derivat eines sterisch gehinderten Amins auf das Elastomere aufgepfropft wird und in einem zweiten Schritt ein Gemisch von Styrol oder α-Methylstyrol und mindestens einem Comonomer aufgepfropft wird.

3. Verfahren gemäss Anspruch 2, wonach beide Verfahrensschritte in Emulsion durchgeführt werden.

4. Verfahren gemäss Anspruch 2, wonach im ersten Schritt ein Gemisch eines ungesättigten Derivates eines sterisch gehinderten Amins und eines Alkylacrylates auf das Elastomer aufgepfropft wird.

5. Verfahren gemäss Anspruch 2, wonach im zweiten Schritt ein Gemisch aus Styrol und Acrylnitril oder Methylmethacrylat aufgepfropft wird.

6. Verfahren gemäss Anspruch 1, bei dem als Elastomer Polybutadien verwendet wird.

## Claims (Claims for the following Contracting State(s): BE, DE, FR, GB, IT, NL)

1. A light-stabilized copolymer of styrene or α-methylstyrene and at least one comonomer, the comonomer containing crosslinked elastomer particles which are modified by copolymerization with an unsaturated derivative of a sterically hindered amine.

2. A copolymer according to claim 1, which is a graft copolymer of styrene or α-methylstyrene and at least one comonomer on the modified crosslinked elastomer.

3. A copolymer according to claim 1, wherein the comonomer is acrylonitrile.

4. A copolymer according to claim 1, wherein the comonomer is methyl methacrylate.

5. A copolymer according to claim 1, wherein the elastomer particles consist of a graft copolymer of an unsaturated derivative of a sterically hindered amine on a crosslinked elastomer.

6. A copolymer according to claim 1, wherein the elastomer is polybutadiene.

7. A copolymer according to claim 1, wherein the sterically hindered amine is a copolymerizable unsaturated derivative of 2,2,6,6-tetramethylpiperidine.

8. A copolymer according to claim 7, wherein the unsaturated derivative of tetramethylpiperidine is a compound of the formula I 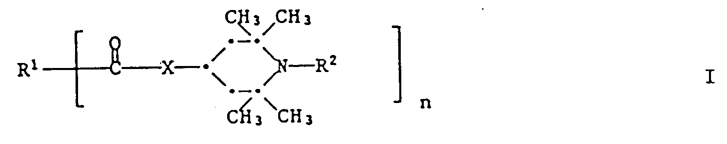 in which n is 1 or 2 and X is -O- or -N(R³)-,
R¹, where n = 1, is C₁-C₁₈alkyl, C₂-C₅alkenyl, C₅-C₈cycloalkyl, C₇-C₉phenylalkyl, phenyl, phenyl which is substituted by halogen, C₁-C₄alkyl or C₁-C₄alkoxy, or a group R⁴OOC-CH=CH- or, where n = 2, C₂-C₁₀alkylene, vinylene, C₆-C₁₂arylene or cyclohexylene,
R² is hydrogen, C₁-C₁₂alkyl, C₃-C₅alkenyl, C₇-C₉phenylalkyl, C₂-C₁₀alkanoyl, C₃-C₆alkenoyl or a group of the formula III 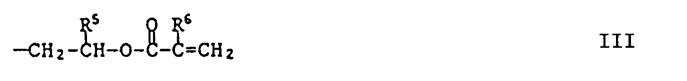 R³ is hydrogen, C₁-C₁₂alkyl or C₅-C₈cycloalkyl,
R⁴ is hydrogen or C₁-C₁₂alkyl,
R⁵ is hydrogen, CH₃ or CN and
R⁶ is hydrogen, C₁-C₁₂alkyl or phenyl,
at least one of the substituents R¹ and R² containing an ethylenic double bond.

9. A copolymer according to claim 7, wherein the unsaturated tetramethylpiperidine derivative is a compound of the formula II 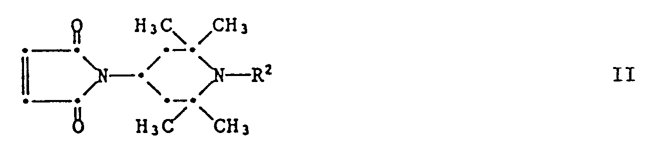 in which R² is hydrogen, C₁-C₁₂alkyl, C₃-C₅alkenyl, C₇-C₉phenylalkyl or C₂-C₁₀alkanoyl.

10. A copolymer according to claim 7, wherein the unsaturated tetramethylpiperidine derivative is a compound of the formula I, where n is 1, X is -O-, R¹ is C₂-C₅alkenyl and R² is hydrogen, C₁-C₄alkyl , allyl, benzyl or acetyl.

11. A copolymer according to claim 7, wherein the unsaturated tetramethylpiperidine derivative is a compound of the formula I, where n is 1 or 2, X is -O-, R¹, where n = 1, is C₁-C₁₈alkyl, cyclohexyl or phenyl and, where n = 2, is C₂-C₈alkylene, and R² is C₃-C₆alkenoyl.

12. A copolymer according to claim 7, wherein the unsaturated tetramethylpiperidine derivative is a compound of the formula I, where n is 1, X is -O-, R¹ is C₂-C₅alkenyl and R² is a group of the formula III, where R⁵ and R⁶ are hydrogen or CH₃.

13. A copolymer according to claim 8, wherein the unsaturated tetramethylpiperidine derivative is 1,2,2,6,6-acryloyloxypiperidine.

14. A copolymer according to claim 1, containing 0.1 to 10% by weight of a sterically hindered amine in copolymerized form.

15. A process for the preparation of a light-stabilized styrene or α-methylstyrene copolymer by grafting a mixture of styrene or α-methylstyrene and at least one comonomer onto a crosslinked copolymer of an elastomer with an unsaturated derivative of a sterically hindered amine.

16. A process according to claim 15, wherein, in a first step, the unsaturated derivative of a sterically hindered amine is grafted onto the elastomer and, in a second step, a mixture of styrene or α-methylstyrene and at least one comonomer is grafted on.

17. A process according to claim 16, wherein both process steps are carried out in emulsion.

18. A process according to claim 16, wherein, in the first step, a mixture of an unsaturated derivative of a sterically hindered amine and an alkyl acrylate is grafted onto the elastomer.

19. A process according to claim 16, wherein, in the second step, a mixture of styrene and acrylonitrile or methyl methacrylate is grafted on.

20. A process according to claim 15, wherein polybutadiene is used as the elastomer.

## Claims (Claims for the following Contracting State(s): ES)

1. A process for the preparation of a light-stabilized styrene or α-methylstyrene copolymer by grafting a mixture of styrene or α-methylstyrene and at least one comonomer onto a crosslinked copolymer of an elastomer with an unsaturated derivative of a sterically hindered amine.

2. A process according to claim 1, wherein, in a first step, the unsaturated derivative of a sterically hindered amine is grafted onto the elastomer and, in a second step, a mixture of styrene or α-methylstyrene and at least one comonomer is grafted on.

3. A process according to claim 2, wherein both process steps are carried out in emulsion.

4. A process according to claim 2, wherein, in the first step, a mixture of an unsaturated derivative of a sterically hindered amine and an alkyl acrylate is grafted onto the elastomer.

5. A process according to claim 2, wherein, in the second step, a mixture of styrene and acrylonitrile or methyl methacrylate is grafted on.

6. A process according to claim 1, wherein polybutadiene is used as the elastomer.

## Revendications (Revendications pour l'(les) Etat(s) contractant(s) suivant(s): BE, DE, FR, GB, IT, NL)

1. Copolymère du styrène ou de l'α-méthylstyrène et d'au moins un comonomère, stabilisé contre une altération par la lumière et contenant des particules élastomères réticulées qui sont modifiées par copolymérisation avec un dérivé insaturé d'une amine à empêchement stérique.

2. Copolymère selon la revendication 1, qui est un copolymère de styrène ou d'α-méthylstyrène et d'au moins un comonomère greffé sur l'élastomère réticulé modifié.

3. Copolymère selon la revendication 1, dans lequel le comonomère est l'acrylonitrile.

4. Copolymère selon la revendication 1, dans lequel le comonomère est le méthacrylate de méthyle.

5. Copolymère selon la revendication 1, caractérisé en ce que les particules élastomères sont constituées d'un copolymère obtenu par greffage d'un dérivé insaturé d'une amine à empêchement stérique sur un élastomère réticulé.

6. Copolymère selon la revendication 1, caractérisé en ce que l'élastomère est le polybutadiène.

7. Copolymère selon la revendication 1, caractérisé en ce que l'amine à empêchement stérique est un dérivé insaturé copolymérisable de la tétraméthyl-2,2,6,6 pipéridine.

8. Copolymère selon la revendication 7, dans lequel le dérivé insaturé de la tétraméthylpipéridine est un composé de formule I : 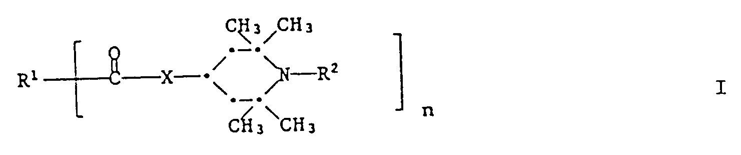 dans laquelle n vaut 1 ou 2, et X est -O- ou -N(R³)-,
R¹ quand n = 1, est un radical alkyle en C₁-C₁₈, alcényle en C₂-C₅, cycloalkyle en C₅-C₈, phénylalkyle en C₇-C₉, phényle éventuellement substitué par des radicaux halogéno, alkyle en C₁-C₄ ou alcoxy en C₁-C₄, ou encore un groupe R⁴OOC-CH=CH-, et, pour n = 2, est un radical alkylène en C₂-C₁₀, vinylène, arylène en C₆-C₁₂ ou cyclohexylène,
R² est un hydrogène ou un radical alkyle en C₁-C₁₂, alcényle en C₃-C₅, phénylalkyle en C₇-C₉, alcanoyle en C₂-C₁₀, alcénoyle en C₃-C₆ ou un groupe de formule III : 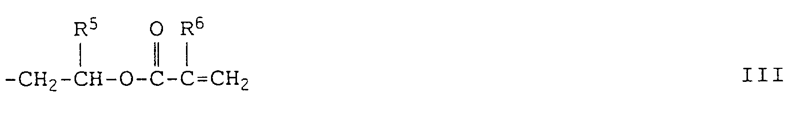
R³ est un hydrogène ou un radical alkyle en C₁-₁₂ ou cycloalkyle en C₅-C₈,
R⁴ est un hydrogène ou un radical alkyle en C₁-C₁₂,
R⁵ est un hydrogène, CH₃ ou CN, et
R⁶ est un hydrogène ou un radical alkyle en C₁-C₁₂ ou phényle,
au moins l'un des substituants R¹ et R² contenant une double liaison éthylénique.

9. Copolymère selon la revendication 7, dans lequel le dérivé insaturé de la tétraméthylpipéridine est un composé de formule II : 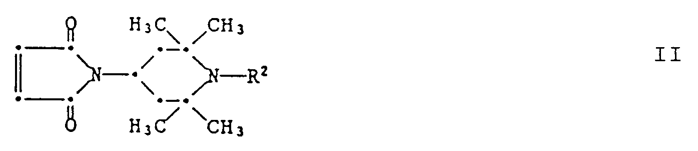 dans laquelle R² est un hydrogène ou un radical alkyle en C₁-C₁₂, alcényle en C₃-C₅, phénylalkyle en C₇-C₉ ou alcanoyle en C₂-C₁₀.

10. Copolymère selon la revendication 7, dans lequel le dérivé insaturé de la tétraméthylpipéridine est un composé de formule I, dans laquelle n vaut 1, X est -O-, R¹ est un radical alcényle en C₂-C₅, et R² est un hydrogène ou un radical alkyle en C₁-C₄, allyle, benzyle, ou acétyle.

11. Copolymère selon la revendication 7, dans lequel le dérivé insaturé de la tétraméthylpipéridine est un composé de formule I, dans laquelle n vaut 1 ou 2, X est -O-, R¹, pour n = 1, est un radical alkyle en C₁-C₁₈, cyclohexyle ou phényle, et, pour n = 2, un radical alkylène en C₂-C₈, et R² est un radical alcénoyle en C₃-C₆.

12. Copolymère selon la revendication 7, dans lequel le dérivé insaturé de la tétraméthylpipéridine est un composé de formule I, dans laquelle n vaut 1, X est -O-, R¹ est un radical alcényle en C₂-C₅ et R² est un groupe de formule III, R5 et R6 représentant chacun un hydrogène ou CH₃.

13. Copolymére selon la revendication 8, dans lequel le dérivé insaturé de la tétraméthylpipéridine est la pentaméthyl-1,2,2,6,6 acryloyloxy-4 pipéridine.

14. Copolymère selon la revendication 1, contenant de 0,1 à 10 % en poids d'une amine à empêchement stérique sous une forme liée au copolymère.

15. Procédé pour préparer un copolymère du styrène ou de l'α-méthylstyrène stabilisé contre une altération par la lumière, par greffage d'un mélange de styrène et d'α-méthylstyrène et d'au moins un comonomère sur un copolymère réticulé d'un élastomère comportant un dérivé insaturé d'une amine à empêchement stérique.

16. Procédé selon la revendication 15, dans lequel, dans une première étape, on greffe sur l'élastomère le dérivé insaturé d'une amine à empêchement stérique et, dans une deuxième étape, on greffe un mélange de styrène ou d'α-méthylstyrène et d'au moins un comonomère.

17. Procédé selon la revendication 16, dans lequel les deux étapes sont effectuées en émulsion.

18. Procédé selon la revendication 16, dans lequel, dans la première étape, on greffe sur l'élastomère un mélange d'un dérivé insaturé d'une amine à empêchement stérique et d'un acrylate d'alkyle.

19. Procédé selon la revendication 16, dans lequel, dans la deuxième étape, on greffe un mélange de styrène et d'acrylonitrile ou de méthacrylate de méthyle.

20. Procédé selon la revendication 15, dans lequel on utilise comme élastomère du polybutadiène.

## Revendications (Revendications pour l'(les) Etat(s) contractant(s) suivant(s): ES)

1. Procédé pour préparer un copolymère du styrène ou de l'α-méthylstyrène stabilisé contre une altération par la lumière, par greffage d'un mélange de styrène et d'α-méthylstyrène et d'au moins un comonomère sur un copolymère réticulé d'un élastomére comportant un dérivé insaturé d'une amine à empêchement stérique.

2. Procedé selon la revendication 1, dans lequel, dans une première étape, on greffe sur l'élastomère le dérivé insaturé d'une amine à empêchement stérique et, dans une deuxième étape, on greffe un mélange de styrène ou d'α-mèthylstyrène et d'au moins un comonomère.

3. Procédé selon la revendication 2, dans lequel les deux étapes sont effectuées en émulsion.

4. Procédé selon la revendication 2, dans lequel, dans la première étape, on greffe sur l'élastomère un mélange d'un dérivé insaturé d'une amine à empêchement stérique et d'un acrylate d'alkyle.

5. Procédé selon la revendication 2, dans lequel, dans la deuxième étape, on greffe un mélange de styrène et d'acrylonitrile ou de méthacrylate de méthyle.

6. Procédé selon la revendication 1, dans lequel on utilise comme élastomère du polybutadiène.
